# EUROPEAN PATENT APPLICATION

(11) **EP 4 825 487 A1**
(43) Date of publication of application: **21.10.2026**
(21) Application number: 24904295.3
(22) Date of filing: 16.12.2024
(51) Int. Cl.: B01J 21/04, B01J 35/54, B01J 37/02, B01J 23/755, C01B 3/04

(54) **SUPPORT, METHOD FOR MANUFACTURING SUPPORT, AND CATALYST FOR AMMONIA DECOMPOSITION CONTAINING SUPPORT**

(30) Priority: 14.12.2023 KR 20230182485
(71) Applicant: POSCO Holdings Inc., Pohang-si, Gyeongsangbuk-do 37859 (KR)
(72) Inventor: KWON, Gi-Hun, Pohang-si, Gyeongsangbuk-do 37877 (KR); JOO, Sang-Wook, Pohang-si, Gyeongsangbuk-do 37877 (KR); RHEE, Chang-Houn, Pohang-si, Gyeongsangbuk-do 37877 (KR); PARK, Hai-Woong, Pohang-si, Gyeongsangbuk-do 37877 (KR); KIM, Beom-Sik, Pohang-si, Gyeongsangbuk-do 37877 (KR); JEON, Nam-Gi, Pohang-si, Gyeongsangbuk-do 37877 (KR)
(74) Representative: Pfenning, Meinig & Partner mbB
(86) International application number: PCT/KR2024/020337
(87) International publication number: WO 2025/127730

(57) **Abstract**

According to exemplary embodiments of the present invention, a support is provided. The support is a support of a catalyst for ammonia decomposition, and the amount of acid sites of the support, as measured by NH3-temperature programmed desorption (NH3-TPD), is 0.006-0.010 mmol/g. Also, according to other exemplary embodiments of the present invention, provided are a method for manufacturing the support, and a catalyst for ammonia decomposition, comprising the support.

## Description

### Technical Field

The present disclosure relates to a support and a method for manufacturing a support.

In addition, the present disclosure relates to a catalyst for ammonia decomposition including a support.

### Background Art

Globally, efforts are underway to rebuild carbon-based energy societies into renewable energy-based ones in order to overcome the challenges of climate change and various environmental pollution problems. However, since the distribution of renewable energy is skewed by region and time, a trading system between nations or continents should be established using energy storage systems for storing large amounts of renewable energy for universal use thereof.

Hydrogen is a substance suitable for storing stable energy in large volumes and over long periods, and various countries including Europe, Japan, Saudi Arabia, and Australia are striving to establish a global renewable energy trading systems utilizing hydrogen as a renewable energy storage medium. Meanwhile, according to the Korean government's roadmap for revitalizing the hydrogen economy, the government has set a goal to increase the domestic supply of hydrogen. However, since hydrogen has a very low energy density relative to volume, research into chemical and physical hydrogen storage methods is essential to economically import large quantities of hydrogen from abroad. To this end, various hydrogen storage materials such as ammonia (NH₃), liquid organic hydrogen oxides (LOHCs), and liquid hydrogen (LH₂) are being actively researched. In particular, ammonia is attracting attention as a hydrogen (renewable energy) storage medium with high commercial feasibility due to the high hydrogen storage capacity (17.6 wt.%, 108 g/L), ease of storage (8.74 kPa, 20°C), and the ability to utilize existing ammonia storage and transportation infrastructure.

One molecule of ammonia consists of three hydrogen atoms and one nitrogen atom. When this ammonia molecule is decomposed at high temperature, only hydrogen and nitrogen gas, the latter of which makes up 78% of the air, are produced. Ammonia has the advantage of utilizing existing infrastructure for large-scale storage and long-distance transportation, and furthermore, since ammonia produces only hydrogen and nitrogen, carbon dioxide emissions can be minimized.

An ammonia decomposition reaction may be performed at high temperature according to the following Reaction Formula.

2NH3(g) → N₂(g) + 3H₂(g)

To increase the efficiency of the ammonia decomposition reaction, it is important to improve the performance of a catalyst. To improve the performance of such a catalyst, there have been attempts to add promoters such as rare earth metals. This is because promoters can improve the performance of a catalyst by changing an electronic structure of a catalytically active metal. However, most of these promoters are comprised of metal elements that are expensive or have limited reserves in specific regions. As a result, when promoters are used in large-scale industrial reactors at the plant scale, problems regarding difficulties in supplying catalysts smoothly or an excessive increase in the cost of the catalysts used may arise.

Therefore, it is necessary to develop technology improving the performance of a catalyst without adding an additive such as a promoter.

(Patent Document 1) Japanese Published Patent Application No. 2023-539511.

### Summary of Invention

### Technical Problem

An object of the present disclosure is to provide a support that can stably support active metal particles and a method for manufacturing the same.

Another object of the present disclosure is to provide a catalyst for ammonia decomposition including a support in which active metal particles are stably bound.

An object of the present disclosure is not limited to the above description. The object of the present disclosure will be understood from the entire content of the present specification, and a person skilled in the art to which the present disclosure pertains will understand an additional object of the present disclosure without difficulty.

### Solution to Problem

According to exemplary embodiments of the present disclosure, provided is a support. The support is a support of a catalyst for ammonia decomposition, wherein an amount of acid sites of the support, measured by NH3-TPD analysis (NH3-Temperature Programmed Desorption), is 0.006 to 0.010 mmol/g.

The support may include alumina.

The alumina may include any one of alpha alumina (α-Al₂O₃), gamma alumina (γ-Al₂O₃), theta alumina (θ-Al₂O₃), and combinations thereof.

The support may be provided in the form of a pellet.

According to other exemplary embodiments of the present disclosure, provided is a method for manufacturing a support. The method for manufacturing the support includes operations of: preparing a support; acid treating the support with an acid solution at a temperature within a range of 85 to 95°C for 30 to 120 minutes; washing the acid-treated support; and drying and then calcining the washed support.

The acid solution may be an aqueous solution of any one of hydrochloric acid (HCl), nitric acid (HNO₃), sulfuric acid (H₂SO₄), hydrofluoric acid (HF), and combinations thereof.

A molar concentration of acid in the acid solution may be 4 to 7 M.

The drying of the washed support may be performed at a temperature within a range of 70 to 90°C for 3 to 12 hours.

The calcining of the dried support may be performed at a temperature within a range of 500 to 800°C for 0.5 to 3 hours in a dry air atmosphere.

According to other exemplary embodiments of the present disclosure, provided is a catalyst for ammonia decomposition. The catalyst for ammonia decomposition includes one or more of the supports described above, and active metal particles supported on the support, wherein the active metal includes one or more of nickel (Ni) or nickel-based alloys.

### Advantageous Effects of Invention

As set forth, according to exemplary embodiments of the present disclosure, the performance of a catalyst for ammonia decomposition may be improved by increasing acid sites of a support without adding a separate promoter.

The various and beneficial advantages and effects of the present disclosure are not limited to the above-described content, and may be more easily understood through description of specific embodiments of the present disclosure.

### Brief description of drawings

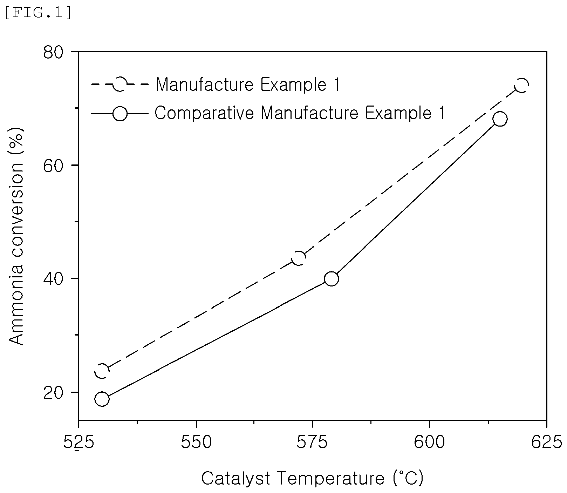

FIG. 1 is a graph illustrating the ammonia decomposition efficiency of a catalyst for ammonia decomposition.

### Best Mode for Invention

Hereinafter, embodiments of the present disclosure will be described in detail so that those skilled in the art can easily implement the present disclosure. However, the present disclosure may be implemented in various different forms and is not limited to the embodiments described herein. The reason is that the right scope of the present disclosure is determined by the matters described in the claims and reasonably inferred therefrom.

In addition, when describing with reference to the drawings, the same or corresponding components will be assigned the same reference numerals and duplicate descriptions thereof will be omitted.

In the following examples, terms such as first, second, and the like are used not in a limited sense, but for the purpose of distinguishing one component from another component.

In the following examples, singular terms include plural terms unless the context clearly dictates otherwise.

In the following embodiments, terms such as include or have mean that the features or components described in the specification exist, and do not exclude in advance the possibility of adding one or more other features or components.

In the drawings, for convenience of explanation, the sizes of components may be exaggerated or reduced. For example, the size and thickness of each component shown in the drawings are shown arbitrarily for convenience of explanation, so the present invention is not necessarily limited to that which is shown.

In a case in which an embodiment can be implemented differently, a specific process sequence may be performed differently from the described sequence. For example, two processes described in succession may be performed at substantially the same time, or may be performed in an order opposite to the order described.

In addition, in describing the present disclosure, when it is determined that a detailed description of related known components or functions thereof may obscure the essence of the disclosure, such detailed description thereof is omitted.

### [Catalyst for Ammonia Decomposition]

According to exemplary embodiments, a catalyst for ammonia decomposition includes a support and active metal particles supported on the support.

According to exemplary embodiments, the active metal particles may be one or more of Ni or Ni-based alloys. However, it should be noted that the active metal particles are not necessarily limited to Ni, and a support described below is not necessarily limited to supporting only Ni or Ni-based alloys.

Nickel or ruthenium may be used as the active metal particles for the catalyst for ammonia decomposition. Thereamong, nickel is an abundant non-precious metal element, and has the advantage of being cheaper than ruthenium. Catalysts using such nickel as active metal particles may be suitable for use in large-scale plant facilities due to low manufacturing costs thereof.

As an example, an active temperature of the catalyst for ammonia decomposition may be 500°C or higher.

### [Support]

According to exemplary embodiments, a support may include alumina. More specifically, alumina may include any one of alpha alumina (α-Al₂O₃), gamma alumina (γ-Al₂O₃), theta alumina (θ-Al₂O₃), and combinations thereof. More specifically, the support may include alpha alumina.

Alumina has excellent thermal stability and durability. By utilizing such alumina as a support of a catalyst for ammonia decomposition, the stability of the catalyst for ammonia decomposition may be maintained even under hightemperature reaction conditions. In terms of the thermal stability and durability of the catalyst, alpha alumina may be the most desirable.

According to exemplary embodiments, the support may be provided in the form of a pellet. The form of a pellet is a form formed by compressing solid particles. The form of a pellet has excellent physical durability, and may be convenient to be handled not only in experimental-scale reactors but also in commercial plant-scale reactors. Additionally, in the commercial plant-scale reactors, a differential pressure applied to a catalyst layer may be lower for pellet catalysts, as compared to powder catalysts. As a result, excellent performance can be demonstrated with fewer process issues, such as a differential pressure, in various chemical reactions. As described above, by using a support provided in the form of a pellet, the catalyst for ammonia decomposition may be easily applied to commercial plants.

An amount of acid sites of the support, measured by NH3-TPD analysis (NH3-Temperature Programmed Desorption), may be 0.006 to 0.010 mmol/g.

The lower the amount of acid sites of the support, the weaker the binding force between active metal particles and a support, so the active metal particles may be easily detached from the support, and the active metal particles can clump together, which can reduce an active surface area of the catalyst. To prevent this, the amount of acid sites of the support may be 0.006 mmol/g or more. As the amount of acid sites increases, active metal particles may be bonded to the support and exist stably, and a wider distribution of active metal particles may be supported, thereby improving the active surface area of the catalyst for ammonia decomposition. As a result, the performance of a catalyst for ammonia decomposition may be improved. However, when the amount of acid sites of the support exceeds 0.010 mmol/g, the acid site may act as a catalyst, and unintended side reactions thereof may occur. Furthermore, during the ammonia decomposition reaction, it can affect an electronic structure of the active metal particles, thereby actually degrading the performance of the catalyst.

### [Method for manufacturing a support]

A method for manufacturing a support may include operations of preparing a support, acid treating the support, washing the support, and calcining the support.

The operation of preparing a support may be performed by calcining a precursor of the support.

Conditions for calcining the precursor of the support may be performed under ordinary conditions known in the art. As an example, the calcination may be performed by heat-treating the precursor of the support at a temperature range of 400 to 1200°C. More specifically, the calcination may be performed by heat treating the precursor of the support at a temperature range of 1000 to 1200°C.

As a non-limiting example, the precursor of the support may include alumina. The precursor of the support is not particularly limited as long as it is a material that can be calcined to provide a support. As an example, the precursor of the support may be alumina hydrate. More specifically, the precursor of the support may be one or more of alumina trihydrate, alumina monohydrate, or a mixture thereof.

Alumina trihydrate may be one or more of gibbsite, bayerite, or a mixture thereof. Alumina monohydrate may preferably be boehmite, diaspore, or a mixture thereof.

According to exemplary embodiments, a calcined support may be compressed to provide a support provided in the form of a pellet. In this case, a structure of the support may be stably maintained during the manufacturing process, thereby improving the quality of a final product, which is a catalyst for ammonia decomposition.

The operation of acid treating a support may be performed by acid treating the support with an acid solution under predetermined temperature and time conditions. As a result, the surface characteristics of the support may be modified, which may increase an amount of acid sites of the support. Therefore, active metal particles may be more easily supported on a surface of the support. As a result, even relatively small active metal particles may be uniformly distributed on the support, which can improve the performance of a catalyst for ammonia decomposition. In addition, the active metal particles may also reduce the impact on the active metal particles compared to an additional treatment thereof with a separate promoter after the catalyst for ammonia decomposition is manufactured. As a result, the stability and performance of the catalyst for ammonia decomposition may be improved.

According to exemplary embodiments, an acid treatment may be performed at a temperature within a range of 85 to 95°C. More specifically, an acid treatment may be performed at a temperature within a range of 90 to 95°C. When the acid treatment temperature is lower than 85°C, an amount of acid sites on a support may not increase sufficiently. When the acid treatment temperature exceeds 95°C, a solvent of an acid solution may evaporate excessively, and the acid treatment may not be performed properly. In addition, excessively evaporated steam may easily corrode surrounding metals, which may increase safety risks.

An acid treatment may be performed for 30 to 120 minutes. When an acid treatment time is less than 30 minutes, an amount of acid sites of a support may not increase sufficiently. When the acid treatment time exceeds 120 minutes, the amount of acid sites may increase excessively, and the support may dissolve in the acid. In addition, the physical durability of the support may decrease.

The acid solution is not particularly limited as long as it is a solution that can increase the amount of acid sites of the support by acid treating the support. As a non-limiting example, the acid solution may be a strong acid solution. As an example, the acid solution may be an aqueous solution of any one of hydrochloric acid (HCl), nitric acid (HNO₃), sulfuric acid (H₂SO₄), hydrofluoric acid (HF), and combinations thereof. More specifically, the acid solution may be an aqueous solution of hydrochloric acid.

A molar concentration of acid contained in an acid solution may be 4 to 7 M. When the molar concentration of the acid is less than 4 M, a support and acid may not react sufficiently, and an amount of acid sites of the support may not increase to the target level. When the molar concentration of the acid exceeds 7M, the acid and the support may react excessively, resulting in an excessive number of acid sites and a decrease in the physical stability of the support.

The operation of washing a support may be performed by washing the acid-treated support with distilled water. Thereby, impurities such as an acid solution, or the like, remaining on a surface of the support after an acid treatment may be removed such that the quality of the catalyst for ammonia decomposition may be improved. In addition, during a subsequent calcination process, side reactions that may occur due to the impurities remaining on the surface of the support can be minimized.

An operation of calcining the support may be performed by drying the washed support and then heat-treating the same at a predetermined temperature and time.

Drying of the support can be performed for 3 to 12 hours at a temperature within a range of 70 to 90°C.

The calcining of the dried support may be performed at 500 to 800°C for 0.5 to 3 hours. When such calcination conditions are not satisfied, a crystal structure of the support, a final product, may become unstable, and impurities remaining after washing may not be completely removed. In addition, impurities may be bonded to acid sites on the support, which can reduce the amount of acid sites.

According to exemplary embodiments, the calcining may be performed in a dry air atmosphere.

### Mode for Invention

Hereinafter, embodiments of the present disclosure will be described in detail so that those skilled in the art can easily implement the present disclosure. However, the present disclosure may be implemented in various different forms and is not limited to the embodiments described herein. The reason is that the right scope of the present disclosure is determined by the matters described in the claims and reasonably inferred therefrom.

### Example 1

Alpha alumina provided in the form of a pellet was used as a support. A 6M aqueous hydrochloric acid solution was prepared by diluting 62.5g of a 35% aqueous hydrochloric acid (HCl) solution in 100g of distilled water. After dispersing 10g of a support in an aqueous hydrochloric acid solution, the aqueous hydrochloric acid solution was heated to 90°C and maintained at that temperature for 1 hour to acid treat the support. The support was removed from the hydrochloric acid solution, and the residual hydrochloric acid solution on a surface of the support was removed with distilled water. The washed support was dried overnight at 80°C. The dried support was calcined at 600°C in a dry air atmosphere for 1 hour to obtain a final support.

### Comparative Example 1

A support was prepared in the same manner as in the Example 1 above, except that an acid treatment was not performed.

### Comparative Example 2

A support was prepared in the same manner as in Example 1 above, except that an acid treatment was performed at room temperature (about 25°C).

### Comparative Example 3

A support was prepared in the same manner as in Example 1 above, except that an acid treatment was performed at 80°C.

### Manufacture Example 1

A support and a nickel precursor according to Example 1 above were mixed in distilled water, and dried by evaporation. The evaporated product was dried overnight at 80°C, and then reduced for 1 hour in an argon gas atmosphere containing 50 vol% of H2 at 600°C. As a result, a catalyst for ammonia decomposition containing nickel was obtained.

### Comparative Manufacture Example 1

A catalyst for ammonia decomposition was prepared in the same manner as in Manufacture Example 1 above, except that a support according to Comparative Example 1 above was used.

### Experimental Example 1: Confirmation of Performance of Catalyst For Ammonia Decomposition

The performance of a catalyst for ammonia decomposition was compared using the catalysts for ammonia decomposition according to Manufacture Example 1 and Comparative Manufacture Example 1, provided in the form of a pellet. In this case, for a reactor filled with approximately 30g of a catalyst, a space velocity was controlled to 5,000 h⁻¹, a pressure was controlled to 8 barg, and a reaction temperature was controlled to 550, 600, and 650°C to confirm the performance of the catalysts for ammonia decomposition according to Manufacture Example 1 and Comparative Manufacture Example 1.

FIG. 1 is a graph illustrating the ammonia decomposition efficiency of a catalyst for ammonia decomposition.

Referring to FIG. 1, it was confirmed that the catalyst for ammonia decomposition according to Manufacture Example 1 has superior efficiency compared to the catalyst for ammonia decomposition according to Comparative Manufacture Example 1. This is determined to be because an amount of acid sites of the support increased as an acid-treated support was used as the support for the catalyst.

### Experimental Example 2: Confirmation of Increase In Amount of Acid Sites According to Temperature

Amounts of acid sites of supports according to Example 1 and Comparative Examples 1 to 3 described above was quantitatively analyzed using an NH3 TPD analysis method. More specifically, samples of the supports according to Example 1 and Comparative Examples 1 to 3 were pre-treated. Pre-treatment was performed under 1) He flow conditions at a temperature of 500°C for 1 hour, 2) He flow conditions at a temperature of 100°C for 15 minutes, 3) 10% NH₃/He flow conditions at a temperature of 100°C for 30 minutes, and 4)He flow conditions at a temperature of 100°C for 15 minutes. NH₃ may be sufficiently adsorbed onto a surface of Al₂O₃ through pre-treatment. After the pre-treatment, it was heated to 610°C at a heating rate of 10°C /min under the He flow conditions. In this case, NH₃ detached therefrom was identified and quantified using a mass spectrometer, and NH3 TPD analysis was performed.

The analysis results are shown in Table 1 below.

**[Table 1]**

| Classification | Amount of acid sites (mmol/g) |
|---|---|
| Example 1 | 0.007 |
| Comparative Example 1 | 0.003 |
| Comparative Example 2 | 0.004 |
| Comparative Example 3 | 0.005 |

Referring to Table 1, it was confirmed that an amount of acid sites increased by approximately twofold compared to Comparative Example 1, which did not undergo an acid treatment. In addition, it was confirmed that the amount of acid sites increased as an acid treatment temperature increased. However, when the acid treatment temperature exceeds 95°C, a solvent of an acid solution evaporates excessively, so the acid treatment is not performed properly and corrodes surrounding metals, making it impossible to perform the acid treatment, so a separate comparative example was not shown.

While the present invention has been described in detail through exemplary embodiment, other types of exemplary embodiments are also possible. Therefore, the technical spirit and scope of the claims set forth below are not limited to exemplary embodiments.

## Claims

1. Provided is a support, as a support of a catalyst for ammonia decomposition,
wherein an amount of acid sites of the support, measured by NH3-temperature Programmed Desorption (NH3-TPD), is 0.006 to 0.010 mmol/g.

2. The support of claim 1, wherein the support includes alumina.

3. The support of claim 2, wherein the alumina comprises any one of alpha alumina (α-Al₂O₃), gamma alumina (γ-Al₂O₃), theta alumina (θ-Al₂O₃), and combinations thereof.

4. The support of claim 1, wherein the support is provided in the form of a pellet.

5. A method for manufacturing a support, comprising operations of:
preparing a support;
acid treating the support with an acid solution at a temperature within a range of 85 to 95°C for 30 to 120 minutes;
washing the acid-treated support; and
drying and then calcining the washed support.

6. The method for manufacturing a support of claim 5, wherein the acid solution is an aqueous solution of any one of hydrochloric acid (HCl), nitric acid (HNO₃), sulfuric acid (H₂SO₄), hydrofluoric acid (HF), and combinations thereof.

7. The method for manufacturing a support of claim 5, wherein a molar concentration of acid in the acid solution is 4 to 7 M.

8. The method for manufacturing a support of claim 5, wherein the drying of the washed support is performed at a temperature within a range of 70 to 90°C for 3 to 12 hours.

9. The method for manufacturing a support of claim 5, wherein the calcining of the dried support is performed at a temperature within a range of 500 to 800°C for 0.5 to 3 hours in a dry air atmosphere.

10. A catalyst for ammonia decomposition, comprising:
a support of any one of claims 1 to 4; and
active metal particles supported on the support,
wherein the active metal includes one or more of nickel (Ni) or nickel-based alloys.
